# EUROPEAN PATENT APPLICATION

(11) **EP 0 948 118 A2**
(43) Date of publication of application: **06.10.1999**
(21) Application number: 99106456.9
(22) Date of filing: 30.03.1999
(51) Int. Cl.: H02K 49/04

(54) **Eddy current reduction apparatus**

(30) Priority: 30.03.1998 JP 10201698
(71) Applicant: ISUZU MOTORS LIMITED, Shinagawa-ku, Tokyo (JP)
(72) Inventor: Yamamoto, Yasushi, Fujisawa-shi, Kanagawa (JP)
(74) Representative: Niedmers, Ole, Dipl.-Phys.

(57) **Abstract**

A guide tube (18) made of a non-magnetic material having a hollow portion in the form of a rectangle in section is coaxially disposed within a brake drum (13) made of a conductor driven by a rotational shaft (4) and having cooling fins (14). A number of ferromagnetic plates (21) are provided at peripherally equal intervals on an outer peripheral wall portion (18a) of the guide tube (18). Magnet support tubes (19a) and (19b) made of a magnetic material are encased in the hollow portion of the guide tube (18). A number of magnets (20) are coupled at peripherally equal intervals on the outer peripheral surfaces of the magnet support tubes (19a) and (19b). There is provided an actuator (17) for switching and turning one of the magnet support tubes (19a) and (19b) between a braking position at which the magnets (20) exert a magnetic field to the brake drum (13) via the ferromagnetic plates (21) and a non-braking position at which not exerting the magnetic field. There is provided a speeding up mechanism (30) for rotating in speeding up the brake drum (13) by the rotational shaft (4).

## Description

### BACK GROUND OF THE INVENTION

The present invention principally relates to a magnet type eddy current reduction apparatus which assists a frictional brake for large vehicles, and particularly to a magnet type eddy current reduction apparatus adapted to enhance a braking ability without impairing the cooling performance.

According to a generator type reduction apparatus (retarder) disclosed in Japanese Patent Application Laid-Open No. 60-255050 publication, a stator annular body for supporting a field coil of an induction type generator is rotated (reversed) in a direction opposite to a rotor annular body for supporting an armature coil of the induction type generator to increase the relative number of revolutions of the rotor annular body with respect to the stator annular body to enhance the braking ability. In the above-described generator type reduction apparatus, a braking energy is recovered as an electric power, and the power is converted into heat by a load resistor or the like for disposal. Therefore, there occurs no problem such that the braking ability is lowered by heat generation of the rotor annular body.

However, even, if the above-described reversing mechanism is applied to the magnet type eddy current reduction apparatus according to the present invention, that is, even if a magnet support tube for connecting a permanent magnet (hereinafter merely referred to as a magnet unless otherwise specified) in a direction reversed to the brake drum coupled to the rotational shaft, the cooling performance is not enhanced because the absolute number of revolution of the brake drum remains unchanged. Further, since the relative number of revolution of the brake drum and the magnet support tube increases, the heat generating amount of the brake drum increases, the lowering of the braking ability caused by heat generation of the brake drum is remarkable.

In the conventional magnet type eddy current reduction apparatus, the rotational energy of the brake drum is converted into heat from the eddy current for release, but at present, the braking ability is inferior to other reduction apparatuss (retarders), particularly to a fluid type reduction apparatus.

The braking ability of the magnet type eddy current reduction apparatus is proportional to the magnetic force of the magnet, the diameter of the brake drum, and the number of revolutions of the brake drum, and is different depending on the material for the brake drum. The diameter of the brake drum is restricted by the loading space of vehicles, and the number of revolutions of the brake drum is controlled by the number of revolutions of the rotational shaft to which is coupled the brake drum. For enhancing the braking ability, the magnetic force of the magnet is enhanced or the material of the brake drum is selected. However, when the braking ability is enhanced, the heat generating amount of the brake drum increases, and a problem occurs in cooling properties merely by cooling fins, failing to achieve the rapid enhancement of the braking ability. The braking ability is not desired to be enhanced unless the cooling properties of the brake drum are enhanced.

In view of the above-described problems, an object of the present invention is to provide a magnet type eddy current reduction apparatus capable of enhancing the braking ability and enhancing the cooling properties.

### SUMMARY OF THE INVENTION

For solving the above-described problem, the present invention provides a magnet type eddy current reduction apparatus in which magnets including an electromagnet are opposed to a brake drum made of a conductor driven by a rotational shaft to thereby generate an eddy current in said brake drum to obtain a braking force, said apparatus comprising a speeding up mechanism for rotating in speeding up said brake drum by said rotational shaft.

The present invention is characterized in that a brake drum is not coupled to directly to a rotational shaft, but a speeding up mechanism such as a planetary gear mechanism is interposed between the rotational shaft and the brake drum. The speeding up mechanism increases the number of revolutions (rpm) of the brake drum more than that of the rotational shaft. For example, the peripheral speed of the brake drum is made higher by about two times of prior art whereby the brake drum is relatively rotated at the rate about two times of prior art with respect to the magnet of the magnet support tube. Therefore, the braking torque caused by an eddy current will be two times of the conventional apparatus.

Since the braking torque generated by the brake drum is enhanced about two times by the speeding up mechanism, the braking torque received by the rotational shaft is about 4 times. On the other hand, the heat amount generated in the brake drum also increases, but the rotational speed of the cooling fins of the brake drum with respect to the open air is two times, thus increasing also the cooling efficiency. In this manner, according to the present invention, there is obtained a greater braking torque than that of the conventional magnet type eddy current reduction apparatus.

### BRIEF DESCRIPTION OF THE DRAWINGS

These and other objects and features of the invention will become more apparent upon a perusal of the following description taken in conjunction with the accompanying drawings wherein:
FIG. 1 is a side sectional view of a magnet type eddy current reduction apparatus according to a first embodiment of the present invention.
FIG. 2 is a front sectional view of the magnet type eddy current reduction apparatus.
FIG. 3 is a front sectional view of a magnet type eddy current reduction apparatus according to a second embodiment of the present invention.
FIG. 4 is a front sectional view of a magnet type eddy current reduction apparatus according to a third embodiment of the present invention.
FIG. 5 is a side sectional view of a magnet type eddy current reduction apparatus according to a fourth embodiment of the present invention.
FIG. 6 is a side sectional view of a magnet type eddy current reduction apparatus according to a fifth embodiment of the present invention.
FIG. 7 is a side sectional view of a magnet type eddy current reduction apparatus according to a sixth embodiment of the present invention.

### DESCRIPTION OF THE PREFERRED EMBODIMENTS

The magnet type eddy-current reduction apparatus according to the present invention comprises a brake drum 13 in the form of C-shape in section formed of a conductor, a speeding up mechanism 30 for rotating the brake drum 13 in speeding up by means of a rotational shaft 4, a guide tube 18 formed of a non-magnetic material such as aluminum arranged interiorly of the brake drum 13, and magnet support tubes 19a and 19b housed in a hollow portion of the guide tube 18.

An annular plate 7a formed on the inner peripheral wall of a fixed tube 7 is secured to an end wall of a gearbox 2 of a speed change gear for vehicles by means of a plurality of bolts 8. An inner tube portion 13b of the brake drum 13 is rotatably supported on the left half portion of the fixed tube 7 by means of a pair of bearings 6, whereas a sun gear 7b is integrally formed on the outer peripheral surface of the right half portion of the fixed tube 7. The inner tube portion 13b and the end of the fixed tube 7 are sealed by means of a seal member 5. A cylindrical portion 23 is integrally formed in a diametral intermediate portion of a right end wall 13c of the brake drum 13, and the cylindrical portion 23 is formed in its inner peripheral portion with a ring gear 23a. Preferably, a plurality of openings for cooling are provided radially and outwardly extended portion from the cylindrical portion 23 of the right end wall of the brake drum 13.

A boss portion of a plurality of radially extending arms 9 are fitted in the outer end of the output rotational shaft 4 supported by the bearings 3 on the end wall of the gear box 2 and are coupled by a key 4a. A planetary gear 31 is rotatably supported to the extreme end of the arm 9 by means of a support shaft 33. The planetary gear 31 are meshed with the ring gear 23a and the sun gear 7b to thereby constitute the speeding up mechanism 30. The speeding up mechanism 30 is closed with a cover plate 34 coupled to the cylindrical portion 23 by means of a plurality of bolts 32, and a portion between the axial bore of the cover plate 34 and the rotational shaft 4 is sealed by a seal member 35.

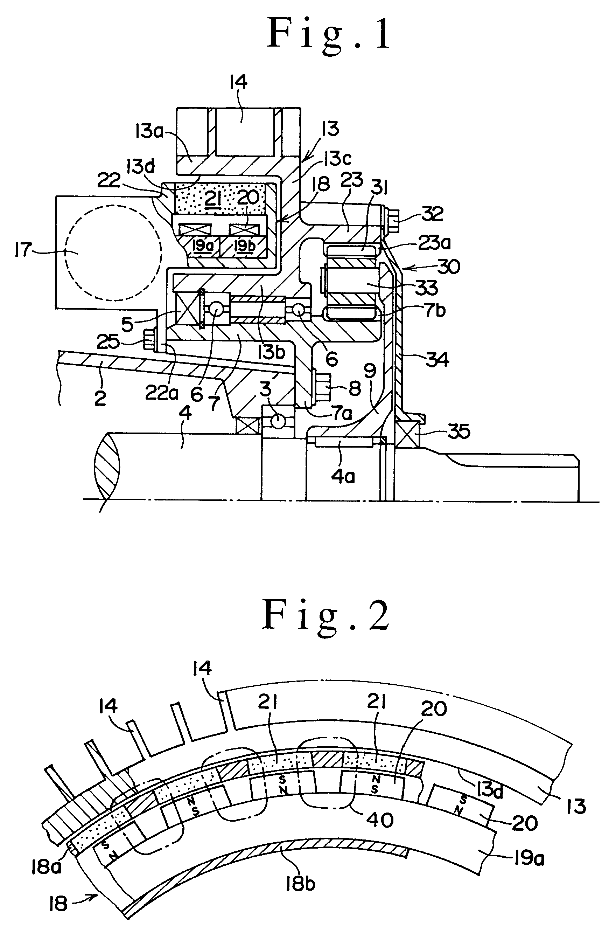

A number of cooling fins 14 are provided at peripherally equal intervals on the outer peripheral wall of an outer tube portion 13a of the brake drum 13. The guide tube 18 having a hollow portion of a rectangular shape in section is coaxially disposed within the brake drum 13. The guide tube 18 formed of a non-magnetic material may be constituted by bonding annular end wall plates of an outer peripheral wall portion 18a (FIG. 2) and an inner peripheral wall portion 18b, but the illustrated guide tube 18 is constituted by bonding a tube portion in the form of channel or C-shape in section to a left-hand end wall plate 22 by means of a number of bolts. A plurality of arms 22a protruding diametrally and inwardly from the end wall plate 22 of the guide tube 18 are secured to the end wall of the fixed tube 7 by means of a plurality of bolts 25.

As shown in FIG. 2, a number of openings are provided at peripherally equal intervals on an outer peripheral portion 18a of the guide tube 18 opposed to an inner peripheral surface 13d of the brake drum 13, and a ferromagnetic plate (a pole piece) 21 is fitted and secured to each opening. Actually, the ferromagnetic plate 21 is cast when the tube portion in the form of C-shape in section of the guide tube 18 is cast of aluminum.

The movable magnet support tube 19a and the immovable magnet support tube 19b are encased in the hollow portion of the guide tube 18. The magnet support tube 19a formed of magnetic material is rotatably supported in the hollow portion of the guide tube 18, and the magnet support tube 19b is fixedly supported in the hollow portion of the guide tube 18. Magnets 20 opposed to the ferromagnetic plates 21 are coupled to the outer peripheral surfaces of the magnet support tubes 19a and 19b so that polarities with respect to the ferromagnetic plates 21 are differentiated peripherally and alternately.

A plurality of actuators 17 are supported at peripherally equal intervals on the end wall plate 22 of the guide tube 18. The actuator 17 has a piston fitted in a cylinder to define a pair of fluid pressure chambers, and the magnet support tube 19a is connected to an arm protruding into the hollow portion of the guide tube 18 via a slit of an end wall plate 22 from a piston rod.

At the braking, as shown in FIG. 2, the magnet support tube 19a is rotated by the actuator 17, and polarities of the magnets 20 arranged in an axial direction, that is, polarities of the magnet 20 of the magnet support tube 19a and the magnet 20 of the magnet support tube 19b against the ferromagnetic plates 21 are made the same. When the rotating brake drum 13 crosses the magnetic field in which the magnet 20 exercises on an inner peripheral surface 13d of the brake drum 13, an eddy current is generated in the brake drum 13 and a brake torque occurs in the brake drum 13. The brake drum 13 generates heat by the eddy current and cooled directly or by the open air through the cooling fins 14. At the time of braking, a magnetic circuit 40 is formed between the magnet support tubes 19a and 19b and the brake drum 13.

At the time of non-braking, when the magnet support tube 19a is rotated by an arrangement pitch of the magnets 20, the magnet 20 of the magnet support tube 19a with respect to the ferromagnetic plate 21 is reversed in polarity to that of the magnet 20 of the magnet support tube 19b, a short-circuiting magnetic circuit is formed between the ferromagnetic plate 21 and the magnet support tubes 19a and 19b, the magnets 20 stop exercising the magnetic field to the brake drum 13, and the brake drum 13 generates no brake torque.

In the aforementioned embodiment, a description has been made of a magnet type eddy current reduction apparatus of the type in which a movable magnet support tube 19a and immovable magnet support tube 19b are disposed interiorly of a brake drum 13, and the movable magnet support tube 19a is rotated to switch between a braking position at which magnets 20 having the same polarities arranged in an axial direction are completely opposed to a common ferromagnetic plate 21 and a non-braking position at which magnets 20 having the different polarities arranged in an axial direction are completely opposed to the common ferromagnetic plate 21. However, the present invention is not limited thereto.

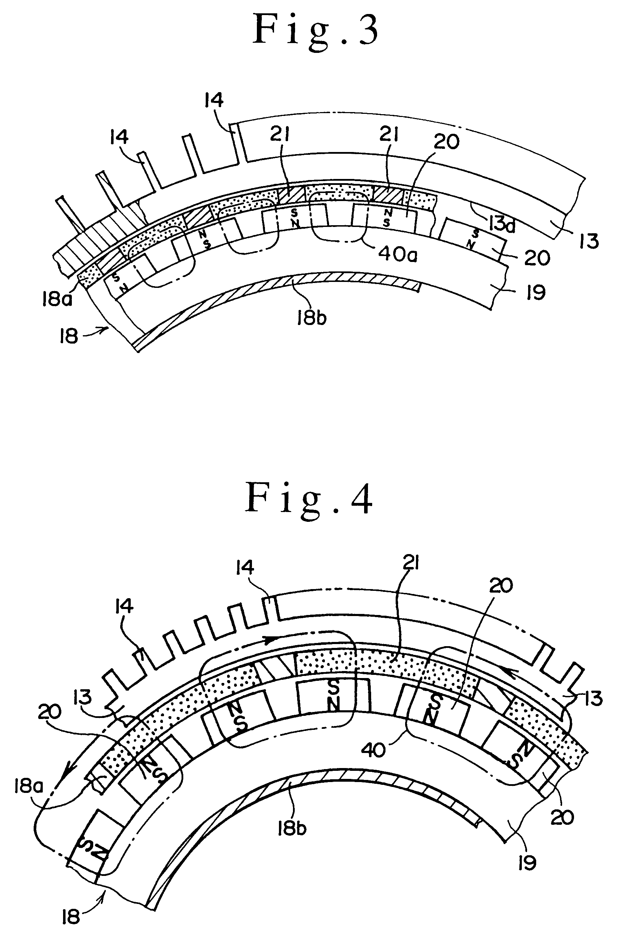

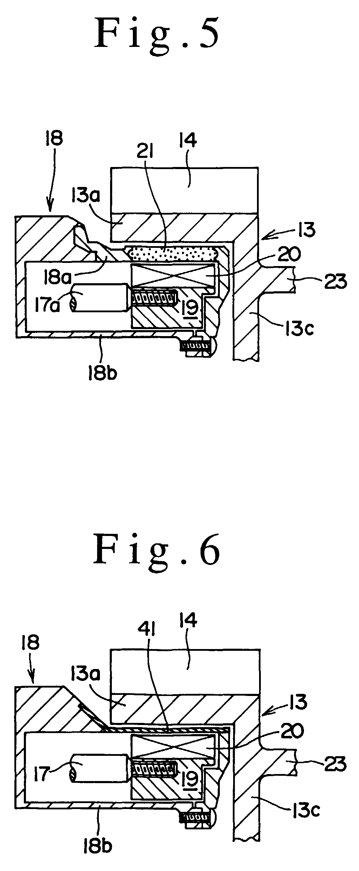

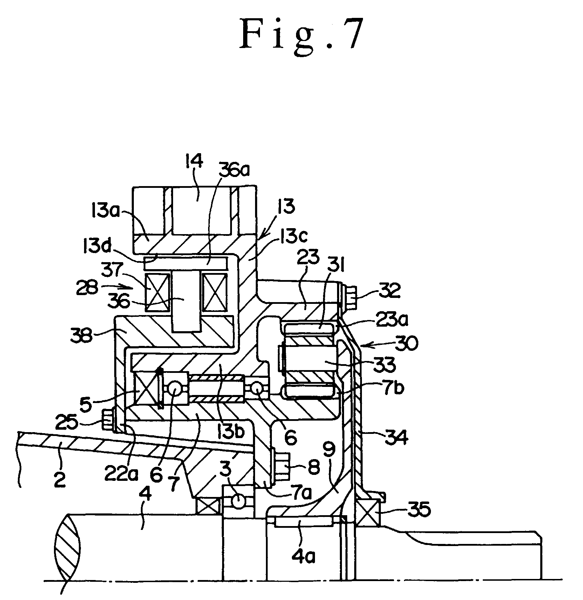

That is, if a speeding up mechanism is provided on the following reduction apparatuses, the braking ability can be increased: a magnet type eddy current reduction apparatus of the type in which a number of magnets are coupled to a single magnet support tube so that polarities of two magnets arranged in a peripheral direction with respect to ferromagnetic plates are alternately different two by two, and the magnet support tube is rotated by an actuator to switch between a braking position at which two magnets having the same polarities arranged in a peripheral direction are completely opposed to a common ferromagnetic plate and a non-braking position at which two magnets having the different polarities arranged in a peripheral direction are completely opposed to a common ferromagnetic plate (embodiment shown in FIG. 4); a magnet type eddy current reduction apparatus of the type in which a single magnet support tube is axially reciprocated by an actuator to switch between a braking position at which magnets are opposed to ferromagnetic plates and a non-braking position at which magnets are not opposed to ferromagnetic plates (embodiment shown in FIG. 5); and an electromagnetic eddy current reduction apparatus an electromagnet is disposed interiorly of a brake drum made of conductor driven by a rotational shaft and having cooling fins, and excitation of the electromagnet is controlled to thereby generate an eddy current in the brake drum to obtain a braking force (embodiment shown in FIG. 7).

In an embodiment shown in FIG. 3, a single magnet support tube 19 is rotated by a half-arrangement pitch of magnets 20 to thereby switch between braking and non-braking. That is, in the braking state, when the magnets 20 having polarities being peripherally alternately different are completely opposed to the ferromagnetic plates 21, the magnets 20 exerts the magnetic field on the brake drum 13, and the rotating brake drum 13 generates a braking torque caused by an eddy current. At this time, a magnetic circuit 40 is generated between he magnet support tube 19 and the brake drum 13 similar to the embodiments shown in FIGS. 1 and 2 (see FIG. 2). On the other hand, in the non-braking state shown in FIG. 3, when the magnet support tube 19 is rotated by a half arrangement pitch of the magnets 20, two magnets 20 which are adjacent to each other peripherally are partly opposed to a common ferromagnetic plate 21 to generate a short-circuiting magnetic circuit 40a between the magnet support tube 19 and the ferromagnetic plate 21 so that since the magnets 20 do not exert the magnetic field on the brake drum 13, the brake drum 13 generates no braking torque.

In the embodiment shown in FIG. 4, magnets 20 coupled at peripherally equal intervals to the outer peripheral surface of a single magnetic support tube 19 are opposed to the ferromagnetic plate 21 two by two, and the polarities with respect to the ferromagnetic plates 21 are peripherally different alternately two by two. At the braking time , when two magnets 20 having the same polarity arranged in a peripheral direction are opposed to the ferromagnetic plates 21, a magnetic circuit 40 is generated between the magnet support tube 19 and the brake drum 13, and the brake drum 13 generates a braking torque. On the other hand, at the non-braking state, when the magnet support tube 19 is rotated by an arrangement pitch of magnets 20, two magnets 20 having different polarities arranged in a peripheral direction are opposed to the common ferromagnetic plates 21, and a short-circuiting magnetic circuit is generated between the magnet support tube 19 and the ferromagnetic plates 21 so that since the magnets 20 do not exert the magnetic field on the brake drum 13, the brake drum 13 generates no braking torque.

In the embodiment shown in FIG. 5, there is provided an eddy current reduction apparatus of the type in which the magnet support tube 19 is moved axially of the brake drum 13 to switch between braking and non-braking. A guide tube 18 formed of a non magnetic material and having a hollow portion in the form of a rectangle in section is fixed to a non-rotating portion of the vehicle so as to face to the interior of the brake drum 13. A number of ferromagnetic plates 21 are disposed at peripherally equal intervals on an outer peripheral wall portion 18a of the guide tube 18. The magnet support tube 19 is axially slidably fitted over an inner peripheral wall portion 18b of the guide tube 18. The magnets 20 are coupled to the outer peripheral surface of the magnet support tube 19 opposite to the ferromagnetic plates 21 so that polarities with respect to the ferromagnetic plates 21 are peripherally alternately different.

At the braking state, when the magnet support tube 19 is moved into the brake drum 13, as shown in FIG. 5, the magnets 20 exert the magnetic field on the brake drum 13. When the rotating brake drum 13 crosses the magnetic field which transmits the ferromagnetic plates 21 from the magnets 20, an eddy current flows into the brake drum 13, and the brake drum 13 generates a braking torque. At the non-braking state, the magnet support tube 19 is moved leftward in FIG. 5 through a rod 17a by, for example, a fluid pressure actuator not shown. When the magnet support tube 19 is drawn outside the brake drum 13, the magnets 20 exert no magnetic field on the brake drum 13, and the brake drum 13 generates no braking torque.

In the embodiment shown in FIG. 6, a tube body 41 formed of a non-magnetic sheet in place of a number of ferromagnetic plates is coupled to a portion of the outer peripheral wall portion of the guide tube 18, opposite to the inner peripheral surface of the brake drum 13. If a wall-thickness of the tube body 41 is set, for example, to not more than 1 mm, the strength in magnetic field exerting on the brake drum 13 by the magnets 20 during braking is slightly weaker than that of the embodiment in FIG. 5, exhibiting similar braking effect.

In the embodiment shown in FIG. 7, an eddy current reduction apparatus comprises, a brake drum 13 formed of a conductor and having a C-shape in section, a speeding up gear mechanism 30 for rotatively coupling the brake drum 13 to a rotational shaft 4, a magnet support tube 38 disposed within the brake drum 13, and a number of electromagnets 28 supported at peripherally equal intervals on the outer peripheral surface of the magnet support tube 38. The electromagnet 28 is formed by winding an electromagnetic coil 37 on a magnetic core 36 secured to the magnet support tube 38, and an end magnetic-pole 36a of the magnetic core 36 is opposed to an inner peripheral surface 13d of an outer tube portion 13a of the brake drum 13. Other constitutions are similar to those of the embodiment shown in FIG. 1.

At the braking time, if the electromagnetic coils 37 are electrified, and the polarities of the end magnetic-poles 36a opposite to the inner peripheral surface of the outer tube portion 13a of the brake drum 13 are peripherally alternately different, a magnetic circuit is generated between the magnet support tube 38 and the brake drum 13, and the brake drum 13 generates a braking torque.

Obviously, many modifications and variations of the present invention are possible in right of the above teachings. It is to be understood, therefore, that the invention can be practiced otherwise than as specifically described.

As described above, the present invention provides a magnet type eddy current reduction apparatus in which magnets are opposed to a brake drum made of a conductor driven by a rotational shaft to thereby generate an eddy current in the brake drum to obtain a braking force, the reduction apparatus comprising a speeding up mechanism for rotating in speeding up the brake drum by the rotational shaft. Speeding up can be accomplished merely by rotation of the brake drum (rotor) without rotating (not turning) the magnet support tube (stator). Therefore, heat dissipation of the brake drum can be promoted while enhancing the braking ability.

By the provision of the speeding up mechanism, even if the magnetic field of magnets is the same, the braking torque that is about four times of that of the conventional magnet type eddy current reduction apparatus is obtained. In other words, the magnetic force necessary for obtaining the same braking torque as that of the prior art is about 1/4.
- 2:: gearbox of speed change gear
- 3:: bearing
- 4:: rotational shaft
- 4a:: key
- 5:: seal member
- 6:: bearing
- 7:: fixed tube
- 7a:: annular plate
- 7b:: sun gear
- 8:: bolt
- 9:: arm
- 12:: sheet
- 13:: brake drum
- 13a:: outer tube portion
- 13b:: inner tube portion
- 13c:: end wall
- 13d:: inner peripheral surface
- 14:: cooling fin
- 17:: actuator
- 17a:: rod
- 18:: guide tube
- 18a:: outer peripheral wall portion
- 18b:: inner peripheral wall portion
- 19:: magnet support tube
- 19a:: magnet support tube
- 19b:: magnet support tube
- 20:: magnet
- 21:: ferromagnetic plate
- 22:: end wall plate
- 22a:: arm
- 23:: cylindrical portion
- 23a:: ring gear
- 25:: bolt
- 28:: electromagnet
- 30:: speeding up mechanis
- 31:: planetary gear
- 32:: bolt
- 33:: support shaft
- 34:: cover plate
- 35:: seal member
- 36:: magnetic core
- 36a:: magnetic-pole
- 37:: electromagnetic coil
- 38:: magnet support tube
- 40:: magnetic circuit
- 40a:: magnetic circuit
- 41:: tube body

## Claims

1. A magnet type eddy current reduction apparatus in which magnets including an electromagnet are opposed to a brake drum made of a conductor driven by a rotational shaft to thereby generate an eddy current in said brake drum to obtain a braking force, said apparatus comprising a speeding up mechanism for rotating in speeding up said brake drum by said rotational shaft.

2. A magnet type eddy current reduction apparatus in which a guide tube made of a magnetic material having a hollow portion in the form of a rectangle in section is coaxially arranged in a brake drum made of a conductor driven by a rotational shaft and having cooling fins, a magnet support tube made of a magnetic material is received in the hollow portion of said guide tube, a number of magnets are coupled at peripherally equal intervals to an outer peripheral surface of said magnet support tube, and which is provided with an actuator for switching and driving said magnet support tube between a braking position at which said magnets exert a magnetic field on the brake drum and a non-braking position at which said magnets exert no magnetic field on the brake drum, said apparatus comprising a speeding up mechanism for rotating in speeding up said brake drum by said rotational shaft.

3. A magnet type eddy current reduction apparatus in which a guide tube made of a magnetic material having a hollow portion in the form of a rectangle in section is coaxially arranged in a brake drum made of a conductor driven by a rotational shaft and having cooling fins, a plurality of magnet support tubes made of a magnetic material are received in the hollow portion of said guide tube provided with a number of ferromagnetic plates at peripherally equal intervals, a number of magnets are coupled to the outer peripheral surfaces of said plurality of magnet support tubes at peripherally equal intervals and so that polarities with respect to said ferromagnetic plates are peripherally alternately different, and there is provided an actuator for switching and turning at least one of said magnet support tubes between a braking position at which the magnets having the same polarities arranged in an axial direction are completely superposed to the ferromagnetic plates and a non-braking position at which the magnets having the different polarities arranged in an axial direction are completely superposed to the ferromagnetic plates, said apparatus comprising a speeding up mechanism for rotating in speeding up said brake drum by said rotational shaft.

4. A magnet type eddy current reduction apparatus in which a guide tube made of a magnetic material having a hollow portion in the form of a rectangle in section is coaxially arranged in a brake drum made of a conductor driven by a rotational shaft and having cooling fins, magnet support tubes made of a magnetic material are received in the hollow portion of said guide tube provided with a number of ferromagnetic plates at peripherally equal intervals, the same number of magnets as said ferromagnetic plates are coupled to the outer peripheral surface of said magnet support tube at peripherally equal intervals and so that the polarities with respect to said ferromagnetic plates are peripherally alternately different and there is provided an actuator for axially switching and driving said magnet support tubes between a braking position at which said magnets are completely superposed to the ferromagnetic plates and a non-braking position at which said magnets are not superposed to the ferromagnetic plates, said apparatus comprising a speeding up mechanism for rotating in speeding up said brake drum by said rotational shaft.

5. A magnet type eddy current reduction apparatus in which a guide tube having a thin wall-thickness made of a magnetic material having a hollow portion in the form of a rectangle in section is coaxially arranged in a brake drum made of a conductor driven by a rotational shaft and having cooling fins, a magnet support tube made of a magnetic material is received in the hollow portion of said guide tube, a number of magnets are coupled at peripherally equal intervals to the outer peripheral surface of said magnet support tube, there is provided an actuator for switching and driving said magnet support tube between a braking position at which said magnets exert a magnetic field on the braking drum and a non-braking position at which said magnets exert no magnetic field on the braking drum, said apparatus comprising a speeding up mechanism for rotating in speeding up said brake drum by said rotational shaft.

6. A magnet type eddy current reduction apparatus in which a guide tube made of a magnetic material having a hollow portion in the form of a rectangle in section is coaxially arranged in a brake drum made of a conductor driven by a rotational shaft and having cooling fins, magnet support tubes made of a magnetic material are received in the hollow portion of said guide tube provided with a number of ferromagnetic plates at peripherally equal intervals, the same number of magnets as said ferromagnetic plates are coupled to the outer peripheral surface of said magnet support tube at peripherally equal intervals and so that the polarities with respect to said ferromagnetic plates are peripherally alternately different and there is provided an actuator for switching and turning said magnet support tubes between a braking position at which said magnets are completely superposed to the ferromagnetic plates and a non-braking position at which two magnets having different polarities arranged in a peripheral direction are partly superposed to the ferromagnetic plates, said apparatus comprising a speeding up mechanism for rotating in speeding up said brake drum by said rotational shaft.

7. A magnet type eddy current reduction apparatus in which a guide tube made of a magnetic material having a hollow portion in the form of a rectangle in section is coaxially arranged in a brake drum made of a conductor driven by a rotational shaft and having cooling fins, magnet support tubes made of a magnetic material are received in the hollow portion of said guide tube provided with a number of ferromagnetic plates at peripherally equal intervals, magnets of two times of said ferromagnetic plates are coupled to the outer peripheral surface of said magnet support tube at peripherally equal intervals and so that the polarities with respect to said ferromagnetic plates are peripherally alternately different two by two and there is provided an actuator for switching and turning said magnet support tubes between a braking position at which two magnets having the same polarities arranged in a peripheral direction are completely superposed to the ferromagnetic plates and a non-braking position at which two magnets having different polarities arranged in a peripheral direction are superposed to the ferromagnetic plates, said apparatus comprising a speeding up mechanism for rotating in speeding up said brake drum by said rotational shaft.

8. A electromagnet type eddy current reduction apparatus in which an electromagnet is arranged in a brake drum made of a conductor driven by a rotational shaft and having cooling fins, and excitation of said electromagnet is controlled to thereby generate an eddy current in said brake drum to obtain a braking force, said apparatus comprising a speeding up mechanism for rotating in speeding up said brake drum by said rotational shaft.

9. The magnet type eddy current reduction apparatus according to claims 1 to 8, wherein said speeding up mechanism comprises a ring gear coupled to said brake drum, a sun gear coupled to a non-rotational portion, and a planetary gear supported on a rotational am secured to said rotational shaft and meshed with said ring gear and said sun gear.
